# EUROPEAN PATENT APPLICATION

(11) **EP 2 525 011 A1**
(43) Date of publication of application: **21.11.2012**
(21) Application number: 11166234.2
(22) Date of filing: 16.05.2011
(51) Int. Cl.: E04D 1/28, E04F 13/00, C09D 7/00, C09D 7/12

(54) **Solar infra red reflective paints**

(71) Applicant: Akzo Nobel Coatings International B.V., 6824 BM Arnhem (NL)
(72) Inventor: Murray, Kenneth Andrew, Maidenhead, Berkshire SL6 6DB (GB); Osborn, Barry Norman, Hatfield, Hertfordshire AL10 9RZ (GB)
(74) Representative: Alferink, Petrus J.T.

(57) **Abstract**

An IR-reflective architectural paint composition comprising
i. red iron oxide pigment
ii. phthalocyanine blue pigment
iii. titanium dioxide and optionally yellow iron oxide
wherein the composition is free of IR-absorptive black pigments, IR-transparent black pigments and IR-reflective black pigments, has a lightness value, L*, when dry, of from 38 to 88 and the weight ratio of of i:ii is from 3:1 to 15:1,

## Description

This invention relates to solar Infra Red reflective paints and in particular it provides infra-red reflective exterior architectural paint compositions which, when dry, have lightness value, L*, from 38 to 88 and which are free of any black pigment. It also provides a method of reducing the temperature rise of a roof or wall on exposure to solar radiation.

When the sun beats down on the surface of buildings, such as walls and roofs, the temperature of the exterior and eventually the interior of the building, unless it is perfectly insulated, will rise. This is largely a consequence of the infra-red (IR) portion of the solar radiation (of wavelength from 700-2500nm) being absorbed by the exterior surfaces and thence transmitted to the interior surface of the wall. In buildings equipped with cooling equipment, such as air conditioners, the temperature can be reduced to comfortable levels, albeit at a substantial cost in energy consumption and thus carbon emissions. Where air conditioners are not fitted, occupants suffer in uncomfortable ambient conditions.

One known way to limit the temperature rise is to paint the exterior of the building a pastel or light colour, in particular white. Such colours are effective at limiting the temperature rise because they reflect not only the visible part of the solar spectrum but also the infra red (IR). White and pastel colours are effective in this way largely because they are free of carbon black, a black pigment that absorbs across the visible and IR region of the solar spectrum.

The very strong absorption by carbon black of IR radiation also means that the deeper pastel colours and especially dark colours themselves are rarely used to paint the exteriors of buildings in hot countries, thus limiting the palette available to architects and decorators.

All colours, can be defined using the well known L*, a*, b* system. In the system, any colour can be represented by:
i. its lightness, L* (where 0 is black and 100 is white)
ii. its a* value which places the colour on an opponent scale from green (negative numbers) to zero (neutral) to red (positive numbers)
iii. its b* value which places the colour on an opponent scale from blue (negative numbers) to zero (neutral) to yellow (positive numbers)
Lightness, L*, is a quantitative measure of the perceived lightness of the colour, ranging from 0 to 100, with 0 representing black and 100 white.

These terms are defined scientifically by the Commission Internationale de l'Eclairage (CIE) [see 'International Lighting Vocabulary', 4th Edition, published IEC/CIE 017.4-1987. ISBN 978 3 900734 07 7].

Additionally it is useful to define the hue, h. Hue is a measure of how close the colour is to red, yellow, green and blue and is derived from the a* and b* values (h = arctan(b*/a*). It is depicted by hue angle ranging from 0 to 360° where the angle defines the position of the hue in colour space, where red, yellow, green and blue are at angles of 0, 90, 180 and 270° respectively. Angles between these 'cardinal points' indicate intermediate colours eg a hue angle of 45 is a reddish yellow (orange) colour.

We have found that, surprisingly, even pastel coloured paints having lightness values, L* of from 38-88, suffer significant temperature rises as a result of exposure to solar radiation. Equally surprisingly, we have found that only 0.05wt% of carbon black pigment, calculated on the weight of the dried paint composition, is sufficient to cause a rise in temperature of a roof or exterior wall.

Attempts have been made by pigment manufacturers to replace carbon black with black pigments which are reflective in the IR region. Clearly such reflective pigments are also substantially non-absorbing in the IR region. Sheppard Color of Cincinnati, Ohio have a range of reflective pigments, known as Arctic® pigments, including a black reflective pigment 10C909. Degussa Metals Catalysts Cerdec Corp., Washington also produces a range of IR- reflective pigments known as Eclipse® including black pigments Eclipse 10201, 10202, 10203 and 10204. Other known IR reflective pigments include chrome iron oxide (pigment brown 29), sold as Xfast EH 0408 (BASF) or Sicopal K 0095 and chrome iron oxide (pigment brown 35), sold as Heucodur IR Black 940 (Heubach). US patent applications 2010/091416 and US 2010/091418 disclose point of sale tinting schemes incorporating such pigments in the colorants.

However, the known black reflective pigments require complicated processes to produce and are costly to manufacture. This tends to make them too expensive to be used routinely in ready mixed architectural paints

In addition to the non-absorbing and reflective pigments are black pigments which are transparent to IR wavelengths. In other words, they neither absorb nor reflect the IR region of the spectrum. An example of such a pigment is Paliogen Black L0086.

Thus, eliminating carbon black from paints presents an opportunity to improve the energy efficiency of buildings. We have now found a way to formulate non-white IR reflective paints which are free of all black pigments, in particular IR-absorptive pigments such as carbon black and IR-reflective pigments such as Sicopal K 0095 and IR-transparent pigments such as Paliogen Black L0086.

In a first aspect of the invention there is provided an IR-reflective architectural paint composition comprising
i. red iron oxide pigment
ii. phthalocyanine blue pigment
iii. titanium dioxide and optionally yellow iron oxide
wherein the composition is free of IR-absorptive black pigments, IR-transparent black pigments and IR-reflective black pigments, has a lightness value, L*, when dry, of from 38 to 88 and the weight ratio of i:ii is from 3:1 1 to 15:1,

Preferably, the paint compositions of the invention have a colour depicted by hue angles, h*, between 60 and 300°. The reason for this is that these hues (orange-red through yellow, yellow-green, green, green-blue and blue) usually contain carbon black pigment to provide the black component in the colour. Consequently dried paint compositions having these hues exhibit the highest temperature rises on exposure to solar radiation and thus will benefit most from the present invention, The hues in the range 300 to 60° (blue-red to orange-red) whilst they may well contain small amounts of carbon black, may also contain some red iron oxide and phthalocyanine blue, in order to achieve the desired hue. Thus the benefit is less for this range of hues.

Phthalocyanine blue is transparent to IR radiation and red iron oxide is partially transparent. Neither, therefore, absorb IR when exposed to sunlight. Consequently, most of the incident IR radiation will pass through a paint film consisting of such pigments, strike the underlying surface, be it a wall or a roof, and heat it directly. Titanium dioxide is reflective of IR radiation and its presence in paint compositions of the invention prevents the radiation reaching the substrate. Advantageously, red iron oxide is also slightly reflective of radiation in the IR. Similarly, yellow iron oxide is also reflective of IR radiation.

Preferably, the paint composition is an exterior architectural paint for coating the exterior surfaces of buildings such as domestic housing and offices.

Red iron oxide is C.I Pigment Red 101 and yellow iron oxide is C.I.Pigment Yellow 42. Phthalocyanine blue is available in various forms including C.I. Pigment Blue 15, 15: l, 15:2, 15:3, 15:4, 15:5, 15:6 and 16, any one of which is suitable for use in the invention.

Titanium dioxide exists in two common forms known as rutile and anatase. The rutile form is preferred as it has the highest refractive index and is thus a better reflector of light, including in the IR region. Suitable examples include Tioxide RTC90 and RTC92, Tiona 595 (available from Cristal)

The particle size of the titanium dioxide is also relevant to light reflection. Below about 100nm, the titanium dioxide particles are not efficient reflectors of the visible and IR spectrum. It is preferred therefore that the mean particles size of the titanium dioxide is at least 100nm, more preferably from 100 to 350nm and most preferably from 100 to 300nm.

Preferably, compositions of the invention comprise at least 2wt% of TiO₂, more preferably at least 4wt%, even more preferably at least 6wt% and most preferably at least 8wt%. As TiO₂ is expensive and has a large carbon footprint, a minimum amount of TiO₂ is desirable in the composition and thus the practical upper limit is between 8 and 16wt%, more preferably less than 12wt% and most preferably less than 10wt%.

The composition, when dry, should comprise at least 4wt% of TiO₂, more preferably at least 8wt%, even more preferably at least 12wt% and most preferably at least 16wt%. The upper limit is between 16 and 32wt%, more preferably less than 28wt%, even more preferably less than 24wt% and most preferably less than 20wt%.

The red and yellow iron oxide pigment should be ground to a particle size in the same size range as for titanium dioxide

The phthalocyanine blue pigment should be ground to transparency.

Preferably the composition when dry has a lightness value, L* of from 60 to 96, more preferably from 62 to 90, even more preferably from 62 to 88, yet more preferably from 65 to 88 and most preferably from 75 to 88.

Preferably, the composition when dry comprises red iron oxide, phthalocyanine blue, titanium dioxide and optionally yellow iron oxide. More preferably, the composition when dry comprises from 0.100 to 5.000wt% of red iron oxide and from 0.015 to 0.900wt% of phthalocyanine blue. Even more preferably, the composition when dry comprises at least 4wt% TiO₂.

Preferably, the ratio of red iron oxide to phthalocyanine blue is from 4:1 to 15:1, more preferably from 5: 1 to 15:1, even more preferably from 5:1 to 11:1, still more preferably from 5: 1 to 8:1 and most preferably from 4:1 to 8:1.

Preferably, the paint composition is opaque at a dry film thickness of 50µm. By opaque is meant that the contrast ratio is at least 95 when a coating of the invention is applied over a black and white opacity card and allowed to dry. The contrast ratio is the light reflectance measured over the black portion of the chart compared to the white portion, expressed as a percentage.

In a further aspect of the invention there is provided a method of reducing the temperature rise of a roof or exterior wall of a building, resulting from absorption of solar IR radiation, comprising coating the exterior surface of the wall or roof with an IR reflective paint composition according to a paint composition of the invention.

In a yet further aspect of the invention there is provided an exterior wall or roof of a building coated with a paint composition of the invention.

It is envisaged that the paint compositions of the invention can be made in both specialised manufacturing facilities in large batches, typically in volumes of at least hundreds of litres; and also in retail stores, where batch quantities no more than 50 litres are made, usually on request from a customer. In the latter case, the paints are made using compact tinting machines, comprising colorants. Colorants are dispersions of pigments. By having a number of the colorants, typically 10 to 20, each formulated using pigments of different hues, a large number of coloured paints can be provided by simply mixing at least one of the colorant(s) with the appropriate base paint in accordance with a predetermined recipe. Even more colours can be produced by providing a plurality of base paints, themselves varying in hue, including clear base paint. A base paint differs from a ready for use (RFU) paint in that the colour has not been finally adjusted. Tinting machines comprise colorants containing black pigment. In the case of the present invention, the colorants comprising the tinting machine are free of any black pigments. The colorants are usually packaged in containers of up to 51 and the base paints up to 25 litres.

By IR reflective is meant that the paint compositions of the invention, when dry, reflects more of the sun's radiation than compositions which rely on carbon black for their black colour component. This can be determined by measuring the surface temperature of a coated substrate as described below. The more reflective the coating the lower the temperature of the panel surface. For the purposes of the invention we regard a coating as IR reflective when the temperature of a coating of the invention is at least 1 °C lower than a corresponding comparative coating when tested over a white first coat as described below.

The invention will now be illustrated by the following examples.

In all examples the red iron oxide used was PR101 1 and the phthalocyanine blue pigment was PB15:3

### Example 1

### Black

A black paint was prepared using a combination of red iron oxide pigment and phthalocyanine blue in a pigment-free base paint, with the formulation below:

| | g | | |
|---|---|---|---|
| Pigment-free Base paint: | 100.00 | | |
| Red iron oxide colorant: | 3.81 | of which red iron oxide pigment: | 2.48g |
| Phthalocyanine blue colorant: | 0.94 | of which phthalocyanine blue pigment: | 0.42g |

The pigment-free base paint is aqueous and has a total solids of 51.9% (by weight) consisting of 30.8% extenders, 19% binder polymer with the remaining solids being additives.

The colorants are liquid pigment concentrates and are added to the base paint and mixed in by vigorous shaking using a Red Devil type shaker.

Test panels were prepared using thin precoated steel panels. These were coated with a wire wound bar with either a black or a white first coat and then two coats of the example matt paint (each of ca 50µm dry film weight) were applied and allowed to dry to give the following CIELAB values calculated from the spectral reflectance curve measured using a Datacolor Spectraflash SF 600 spectrophotometer in accordance with the manufacturer's instructions.

The measured L*, a*, b* values were as follows:
Example lover black : L* 29.64, a* 1.97, b* 3.16
Example lover white : L* 29.74, a* 1.99, b* 3.07
where L* indicates the whiteness of the colour, a* how red or green it is and b* how blue or yellow it is.

That the L*, a*, b* values are so similar over the two substrates demonstrates that the paint has good visual opacity.

A comparative example A paint,containing carbon black, was prepared according to the following recipe :

| | g |
|---|---|
| Pigment-free base paint | 100.00 |
| Carbon black colorant | 10.39 containing 2.08g carbon black pigment |

The comparative example A standard black paint had a CIELab colour L* 27.37, a* - 0.04, b* -0.76.

Test panels were prepared as above.

All four panels were placed on a hardboard support and exposed (with the coating of the invention towards the sun) to direct outdoor sunshine, facing south at an angle of 65° degrees to the horizontal in a northern hemisphere location. A standard white paint was also included in the test. The surface temperature of the panels was recorded using a thermal imaging camera (Fluke TiR Thermal Camera); an average of four measurements was taken: The temperature of the coating surface rose and stabilised within approximately 10-15 minutes exposure.

| | |
|---|---|
| Example 1 over black: | 43.9°C |
| Example 1 over white: | 41.9°C |
| Comparative example A: | 45.6°C |
| Standard white paint: | 24.1°C |

The standard white paint had the following CIELAB values L*=95.8, a*=-0.85 and b*=1.72 values.

### Example 2

A grey paint was prepared according to the recipe below

| | g | | |
|---|---|---|---|
| 12.6% *TiO₂ base paint: | 25.22 | | |
| Pigment-free base paint: | 73.65 | | |
| Red iron oxide colorant: | 3.34 | of which red iron oxide pigment: | 2.17g |
| Phthalocyanine blue colorant: | 0.72 | of which phthalocyanine blue pigment: | 0.32g |

The TiO₂ base paint is aqueous and has a total solids of 53.5% (by weight) consisting of 29.0% extenders, 10.1 % binder polymer, 12.6% TiO₂ with the remaining solids being additives.
*Tioxide TR92 (available from Huntsman Corporation)

Test panels were prepared using thin precoated steel panels as before. These were coated with either a black or a white undercoat and then two coats of the example paint were applied to give the CIELab colours L* 40.8, a* -0.7, b* -1.5; the colour over black and white was almost identical (dE less than 0.3).

A comparative example B paint made using carbon black used the following formulation:

| | g | | |
|---|---|---|---|
| 12.6% TiO₂ base paint: | 25.22 | | |
| Pigment free base paint: | 73.65 | | |
| Black colorant: | 0.25 | of which carbon black pigment: | 0.11g |
| Yellow iron oxide colorant: | 0.19 | of which yellow iron oxide pigment: | 0.10g |
| Red iron oxide colorant: | 0.64 | of which red iron oxide pigment: | 0.42g |

| | | | |
|---|---|---|---|
| Phthalocyanine blue colorant: | 0.05 | of which phthalo blue pigment: | 0.02g |

Test panels were prepared using thin precoated steel panels as before. These were coated with either a black or a white undercoat and then two coats of the example paint were applied to give the CIELab colours L* 40.8, a* -0.7, b* -2.0; the colour over black and white was almost identical (dE less than 0.3). This is within dE 1 to the example 2 formulation and is a good visual colour match.

All four panels were placed on a hardboard support and exposed to direct outdoor sunshine as before. Standard black and white paints were also included in the test. The surface temperature of the panels was recorded. The average of six measurements was taken:

| | |
|---|---|
| Example 2 over black: | 39.0°C |
| Example 2 over white: | 37.7°C |
| Comparative example B over black: | 43.8°C |
| Comparative example B over white: | 44.4 °C |
| Standard black paint: | 43.5 °C |
| Standard white paint: | 25.9°C |

The standard black paint had the following CIELAB values L8=26.4, b*=-.02 and b*=-0.49

A further comparative example B1 was prepared using IR reflective black Xfast EH0408 (BASF). The recipe used was:

***Tioxide RTC90 (available from Huntsman Corporation**

| | g | | |
|---|---|---|---|
| 9.5% *TiO₂ base paint: | 25.22 | | |
| Pigment-free base paint: | 73.65 | | |
| Xfast EH0408: | 6.02 | | |
| Yellow iron oxide colorant : | 1.59 | of which yellow iron oxide pigment: | 0.86g |
| Phthalocyanine blue colorant: | 0.12 | of which phthalocyanine blue pigment: | 0.05g |

Test panels were prepared using thin precoated steel panels as before. These were coated with either a black or a white undercoat and then two coats of the example paint were applied to give the CIELab colours L* 40.9, a* -1.1, b* -2.2; the colour over black and white was almost identical (dE less than 0.3). This is within dE 1 to the example 2 formulation and comparative example 2 and is a good visual colour match.

In the same test as example 2 and comparative example B, this paint gave the following temperatures:
Comparative example B1 over black: 39.2 °C
Comparative example B1 over white:39.2 °C

These temperatures are close to the example 2 over black results but still higher than the example 2 over white results, indicating poorer solar reflectance in the latter case.

### Example 3

A blue-green paint was prepared in accordance with the recipe below:

| | g | | |
|---|---|---|---|
| 12.6% TiO₂ base paint: | 62.42 | | |
| Pigment-free base paint: | 35.18 | | |
| Yellow iron oxide colorant: | 2.99 | of which yellow iron oxide pigment: | 1.62g |
| Red iron oxide colorant: | 0.12 | of which red iron oxide pigment: | 0.08g |
| Phthalocyanine blue colorant: | 1.65 | of which phthalo blue pigment: | 0.73g |

Test panels were prepared using thin precoated steel panels as before. These were coated with either a black or a white undercoat and then two coats of the example paint were applied to give the CIELab colours L* 53.3, a* -24.5, b* -12.3; the colour over black and white was almost identical (dE less than 0.3).

A comparative example C paint made using carbon black used the following formulation:

| | g | | |
|---|---|---|---|
| 9.1 % TiO₂ base paint: | 62.42 | | |
| 0% TiO₂ base paint: | 35.18 | | |

| | | | |
|---|---|---|---|
| Black colorant: | 0.14 | of which carbon black pigment: | 0.06g |
| Phthalocyanine green colorant: | 1.36 | of which phthalo green pigment: | 0.56g |
| Phthalocyanine blue colorant: | 0.90 | of which phthalocyanine blue pigment: | 0.40g |

Test panels were prepared using thin precoated steel panels as before. These were coated with either a black or a white undercoat and then two coats of the example paint were applied to give the CIELab colours L* 54.2, a* -25.2, b* -12.6; the colour over black and white was almost identical (dE less than 0.3). The colour difference compared to the example 3 formulation is dE 1.2 and is a reasonable visual colour match.

All four panels were placed on a hardboard support and exposed to direct outdoor sunshine as before. Standard black and white paints were also included in the test. The surface temperature of the panels was recorded. The average of six measurements was taken:

| | |
|---|---|
| Example 3 over black: | 39.3°C |
| Example 3 over white: | 36.5°C |
| Comparative example C over black: | 43.0°C |
| Comparative example C over white: | 42.7°C |
| Standard black paint: | 47.6°C |
| Standard white paint: | 26.0°C |

The example 3 paint is much cooler than the standard, which is due to the absence of carbon black and the use of additional phthalocyanine blue plus yellow iron oxide, in place of phthalocyanine green in comparative example C.

### Example 4

A pale grey paint was prepared according to the recipe below.

| | g | | |
|---|---|---|---|
| 9.1 % TiO₂ base paint: | 99.8995 | | |
| Red iron oxide colorant: | 0.0825 | of which red iron oxide pigment: | 0.0536g |
| Phthalocyanine blue colorant: | 0.0180 | of which phthalocyanine blue pigment: | 0.0080g |

The TiO₂ base paint is aqueous and has a total solids of 50.9% (by weight) consisting of 30.4% extenders, 9.3% binder polymer, 9.5% TiO₂ with the remaining solids being additives.

Test panels were prepared using thin precoated steel panels as before. These were coated with either a black or a white undercoat and then two coats of the example paint were applied to give the CIELab colours L* 86.1, a* -1.8, b* -1.3; the colour over black and white was almost identical (dE less than 0.2).

A comparative example D paint made using carbon black used the following formulation:

| | g | | |
|---|---|---|---|
| 9.1% TiO₂ base paint: | 99.853 | | |
| Black colorant: | 0.147 | of which carbon black pigment: | 0.029g |

Test panels were prepared using thin precoated steel panels as before. These were coated with either a black or a white undercoat and then two coats of the example paint were applied to give the CIELab colours L* 86.0, a* -1.0, b* -1.8; the colour over black and white was almost identical (dE less than 0.2). This is within dE 1 to the example 4 formulation and is a good visual colour match.

All four panels were placed on a hardboard support and exposed to direct outdoor sunshine as before. Standard black and white paints were also included in the test. The surface temperature of the panels was recorded. The average of four measurements was taken:

| | |
|---|---|
| Example 4 over black: | 28.2°C |
| Example 4 over white: | 27.5°C |
| Comparative example D over black: | 31.4°C |
| Comparative example D over white: | 30.5°C |
| Standard black paint: | 46.7°C |
| Standard white paint: | 25.8°C |

Panels coated with comparative example D are significantly higher in temperature than those coated with example 4, indicating a poorer solar reflectance of comparative example 4.

## Claims

1. An IR-reflective architectural paint composition comprising
i. red iron oxide pigment
ii. phthalocyanine blue pigment
iii. titanium dioxide and optionally yellow iron oxide
wherein the composition is free of IR-absorptive black pigments, IR-transparent black pigments and IR-reflective black pigments, has a lightness value, L*, when dry, of from 38 to 88 and the weight ratio of i:ii is from 3:1 to 15:1,

2. A paint composition according to claim 1 wherein the lightness value, L*, of the composition when dry is from 65 to 88.

3. A paint composition according to claim 1 or claim 2 wherein the titanium dioxide is the rutile form.

4. A paint composition according to any one of the preceding claims wherein the titanium dioxide pigment comprises at least 4wt% based on total dry paint.

5. A paint composition according to any one of the preceding claims wherein the titanium dioxide has a mean particle size of at least 100nm.

6. A paint composition according to any one of the preceding claims wherein the phthalocyanine blue pigment is selected from the group consisting of CI Pigment Blue 15, 15:1, 15:2, 15:3, 15:4, 15:5, 15:6 and 16.

7. A paint composition according to any one of the preceding claims wherein the red iron oxide comprises from 0.100 to 5.000wt% and the phthalocyanine blue comprises 0.015 to 0.900wt% of the composition when dry.

8. A paint composition according to any one of the preceding claims wherein a 50µm dry coat of the composition is opaque.

9. A paint composition according to any one of the preceding claims wherein the composition, when dry, has a colour defined by a hue angle between 60 and 300°.

10. A roof or exterior wall of a building coated with the paint composition according to any one of the preceding claims.

11. A roof or exterior wall of a building according to claim 8 coated with a sufficient amount of the IR-reflective paint composition to provide a dry paint coat of at least 50µm.

12. A method of reducing the temperature rise of a roof or exterior wall of a building exposed to solar IR radiation comprising coating the exterior surface of the wall or roof with an IR-reflective paint composition according to any one of claims 1 to 9.

13. A method according to claim 12 wherein the roof or exterior wall is coated with a sufficient amount of the IR-reflective paint composition according to any one of claims 1 to 7 to provide a dry paint coat of at least 50µm.
